# NEW EUROPEAN PATENT SPECIFICATION

(11) **EP 3 776 932 B2**
(45) Date of publication and mention of the opposition decision: **21.10.2026**
(45) Mention of the grant of the patent: 15.02.2023
(21) Application number: 19722684.8
(22) Date of filing: 27.03.2019
(51) Int. Cl.: H04J 3/06, G06F 3/16

(54) **DEVICE FOR MANAGING DIGITAL AUDIO SIGNALS**
VORRICHTUNG ZUR VERWALTUNG DIGITALER AUDIOSIGNALE
DISPOSITIF DE GESTION DE SIGNAUX AUDIO NUMÉRIQUES

(30) Priority: 30.03.2018 IT 201800004143
(43) Date of publication of application: 17.02.2021
(73) Proprietor: Outline S.r.l., 25020 Flero (BS) (IT)
(72) Inventor: NOSELLI, Michele, 25020 Flero, Brescia (IT); NOSELLI, Stefano, 25020 Flero, Brescia (IT); BIFFI, Giorgio, 25020 Flero, Brescia (IT)
(74) Representative: Chimini, Francesco
(86) International application number: PCT/IB2019/052474
(87) International publication number: WO 2019/186415

(56) References cited:
- US-A- 5 928 342
- US-A- 6 092 119
- US-A1- 2007 043 804
- US-A1- 2016 266 867
- US-A1- 2016 380 757
- US-B1- 6 970 049

## Description

The present invention relates to a device for managing digital audio signals, in particular for professional audio applications.

In the field of audio signal processing/distribution, devices capable of performing specific and individual functions are known of.

For example, some devices specialize in processing audio signals; others are format converters, i.e. they accept one format and translate it into another, without offering processing and logic backup possibilities; other devices are distributors and clock generators.

There are also some systems, mainly for installation and with a very high degree of complexity, that have additional modules and expansion interfaces to receive and send signals on different protocols, for controlling videos, lights, engines, etc.

However, the use of such systems requires the mutual connection of several devices and, being based on an open architecture, is usually restricted to more advanced users.

In fact, the user of these devices must necessarily go through a configuration phase of the device to be able to use it and adapt it to the audio project specifications, until the available computing resources are exhausted.

Another category of known products consists of systems that, through a proprietary protocol, are used to receive and transmit a very large number of signals from/to multiple points without performing any processing.

US 2016/380757 discloses a digital audio processing apparatus comprising a plurality of receivers, each configured to receive audio data and a work clock carried with the audio data and to supply the audio data to the processor circuit signal; a plurality of phase-looked-looped (PLL) circuits corresponding to the plurality of receivers, each PLL circuit being configured to generate a clock signal based on a word clock received by the corresponding receiver; and a selector configured to select a clock signal from among a plurality of clock signals generated by the plurality of PLL circuits, and to supply the selected clock signal to the processor, the processor outputting the processed audio data at timing synchronized with the selected clock signal.

The object of the present invention is to propose a digital audio signal processing device capable of performing multiple functions, in particular processing, backup and distribution of audio signals, but at the same time suitable for use by non-advanced users and immediately ready to use.

Another object of the invention is to combine multiple functions of processing and distribution of audio signals in a single rack unit, so as to achieve a great simplification of wiring, simplicity of use, greater robustness of the system as a whole and greater control and monitoring possibilities.

Said purposes are achieved by a device for managing digital audio signals according to claim 1. The dependent claims describe preferred embodiments of the invention.

According to claim 1, a kit for managing digital audio signals is proposed, comprising the features of claim 1 like a plurality of input channels suitable for receiving input audio signals and a plurality of output channels suitable for transmitting output audio signals, a microprocessor processing unit and programmable logic unit, for example FPGA technology-based.

The processing unit is configured to manage the operating system and an embedded application suitable to communicate with a user interface for configuring the programmable logic unit. For example, the user interface is implemented with a dashboard application that runs on a processing device, such as an electronic computer, that can be connected to the device for managing signals.

In the context of the present invention, a user interface is defined as a set of software (hereinafter referred to as control software) and hardware means that enable the user to configure and monitor the management device (e.g. in terms of signal level, clock status, etc.), also intervening on the parameters of the audio processing algorithm.

The programmable logic unit is configured to manage the input and output channels, the processing of audio signals through an audio processing algorithm, and clock signals through clock management software.

According to one aspect of the invention, the software/hardware configuration of the programmable logic unit is defined by a bitstream file loaded on the programmable logic unit by the processing unit.

In the present invention, the control software of the management device comprises portions of code for:
- monitoring the state of the digital audio signals passing through the management device;
- checking the state of configuration parameters that regulate the processing of digital audio signals performed by the programmable logic unit;
- changing the status of said configuration parameters.

In one embodiment, the status of digital audio signals is monitored through an exchange of UDP ("User Datagram Protocol") packets.

In one embodiment, the control software uses an exchange of TCP packets with the processing unit for reading and/or modifying the status of the configuration parameters.

According to one aspect of the invention, the processing unit and programmable logic unit are configured to assign one or more channels to a group; a group of channels may also include channels from different devices.

As will be described in more detail below, a group is a virtual entity that allows the user to quickly control the configuration parameters of a device: in fact, acting on the group parameters acts on all the channels assigned to that group. A group can be assigned two or more channels from the same signal management device, but also assigned two or more channels from different devices. In this way, the operator's intervention time is greatly reduced as is the complexity of the sound reinforcement project which often requires a large number of channels to be managed individually.

In one embodiment, the processing unit and programmable logic unit are configured to implement a group interface suitable for adding or modifying a level of regulation with respect to that already present on input channels.

In more detail, when the user changes the status of a configuration parameter via the dashboard application, for example, moves a group gain fader, the new parameter value is first saved in the dashboard application database, then the new value is sent to the processing unit, which in turn transmits it to the programmable logic unit.

In one embodiment, the processing unit and programmable logic unit are configured to create, following an exchange with the user interface application, one or more customised control interfaces containing a desired selection of channels.

According to the invention, the programmable logic unit is provided, for each input channel, with an Asynchronous Sample Rate Converter, ASRC, so as to synchronize digital audio signals with clock signals completely independent of each other, optionally one or more of said clock signals being different from the clock signal of the device.

According to one aspect of the invention, the programmable logic unit is configured to:
- process a maximum number of input channels and output channels simultaneously;
- process two or more different digital audio signal transmission protocols;
- convert a digital audio signal received in a first format corresponding to a first transmission protocol into a digital audio signal in a second format corresponding to a second transmission protocol;
- assign any input channel to any output channel synchronous therewith.

In more detail, the programmable logic unit is suitable to implement a direct connection function suitable to exactly report on an output port an audio signal present on an input port.

In this way, the management device allows a cascade connection thereof with one or more similar devices to perform a conversion of a number of channels greater than the maximum number of channels of a single processing device. In making such cascade connection, preferably, the user is shown a control interface of a single virtual device having a number of channels greater than the maximum number of channels of a single management device.

This technical solution is particularly significant when using multi-channel point-to-point protocols, such as the AES10 transmission protocol.

Assuming, for example, that the management device is able to convert 16 channels and that the input channels are the 64 channels of the AES10 point-to-point multi-channel protocol, thanks to the direct connection function it is possible to return the signal present at the input (possibly electrically regenerated) to the AES10 output connector, allowing a cascade connection of more (in this case four) management devices. At this point, each management device can pick up 16 different channels from the flow of the 64 channels, resulting in a conversion of a number of channels greater than the maximum number of channels of a single device.

The direct connection function therefore solves the problem of the impossibility of doubling the input signal.

According to the invention, the control software comprises portions of code suitable to allow a user to define a priority for processing digital audio signals in input and clock signals. In this regard, the programmable logic unit is configured, for example via a dedicated IP, to select the audio channel, preferably the most reliable audio channel, based on the status of the clock signals and the status of the audio signals. Preferably, similarly, the programmable logic unit contains an IP capable of selecting the most reliable clock signal, based on the state of the selectable clock signals.

It should be noted, as is known to the person skilled in the art, that in the electronic field the term "IP" refers to a circuit block, designed using a circuit description language, which performs a specific function. In the programmable logic unit, one or more different blocks can be allocated and connected to each other. In the context of the present invention, each IP block receives in input one or more signal streams, processes them and has as output another signal stream, the processed signal.

Examples of IPs that will be mentioned later in the description are: Input DSP, Aux Mixer, Matrix Mixer, Output DSP.

It should be noted that digital transmission protocols of audio signals, such as AES3, AES10, Dante, etc., carry additional information in addition to audio content. In a 32-bit interface, for example, usually 24 bits have the audio sample information, the others are status bits. A digital channel is considered valid or not depending on the status of the clock signal and the status bits associated with the protocol used. For example, the clock might be valid but not the channel. If there is no clock, i.e. if there is no carrier, then there is no audio signal either.

In particular, the programmable logic unit is programmed to implement:
- a clock detector suitable to allow the recognition of the type and quality of a clock signal through the use of a counter and with definable tolerance thresholds;
- a multiplexer suitable to receive as input all the possible clock signals input to the device and, based on the state of each of them and based on the list of priorities defined, select the most suitable clock.

According to another aspect of the invention, the programmable logic unit is configured to allocate an Asynchronous Sample Rate Converter, ASRC, with multiple digital audio signals to be processed, said ASRC being controlled by a multiplexer driven on the basis of the status of the various channels to be processed or inserted in a priority list. The priority list is a dynamic list (which can also be empty) of sorted items. The first item on the list is the highest priority. The last one on the list is the lowest priority. As will be described in more detail below, the device is able to implement backup strategies that are based on this list. The backup strategy chooses the first item on the list; if for some reason the first item in the list has problems and turns out to be invalid, then the next priority item is selected, and so on. The backup strategy is based on the priority list, both for backup of audio signals and for backup of clock signals.

The present invention therefore also relates to a kit for managing digital audio signals, comprising a management device as described above and a user interface based on control software of the management device comprising code portions for:
- monitoring the status of the channels passing through the management device;
- checking the status of configuration parameters that regulate the processing of digital audio signals made by the programmable logic unit;
- changing the status of said configuration parameters.

The characteristics and advantages of the device according to the invention will, in any case, be evident from the description given below of its preferred embodiments, made by way of a non-limiting example with reference to the appended drawings, wherein:
- Figure 1 illustrates the rear side of a practical example of a management device according to the invention;
- Figure 2 schematically shows the functional blocks of the management device electronics;
- Figure 3 shows a screen of the control interface;
- Figure 4 shows another screen of the control interface;
- Figure 5 shows another screen of the control interface;
- Figure 6 shows another screen of the control interface;
- Figure 7 schematically shows a cascade connection of several management devices, so as to convert the format of a large number of channels;
- Figure 8 shows another screen of the control interface;
- Figure 9 schematically represents the backup strategy of the clock signal;
- Figure 10 shows another screen of the control interface;
- Figure 11 schematically represents the backup strategy of the audio signals;
- Figure 12 schematically represents a Pickoff Point function for performing a distribution of a greater number of channels than the number of processing channels of the device, given that additional partial processing channels are available, based on the pick off point;
- Figure 13 shows a screen of the control interface for performing the Pickoff Point function; and
- Figure 14 schematically represents an embodiment of the Pickoff Point function.

In the following description, unless otherwise specified, the term "channel" is also used to indicate a signal. Furthermore, the terms "input channel" and "output channel" also refer to channels that can simultaneously be received and transmitted by the device, e.g. 216 input/output channels. Instead, to indicate the input/output channels that can be simultaneously processed by the device, usually a selection of the input/output channels, for example 16 out of 216, the term "processing channels" or "processed channel" will be used.

In addition, channels are defined as input and output depending on the point from which they are picked up within the processing layout.

In said drawings, reference numeral 1 globally denotes a management device of digital audio signals according to the invention.

The management device 1 contains, in a single compact machine (a rack unit), multiple functions related to the digital management of audio signals, in particular in the specific field of professional audio applications.

In one embodiment, the management device 1 works with a sampling rate of 96 kHz, a standard value (in fact) for high quality professional applications.

The management device 1 is provided with a plurality of input ports, suitable to receive audio input signals, and a plurality of output ports, suitable to transmit audio output signals to the outside. Input and output ports are therefore understood as connectors, or physical channels, i.e. hardware devices.

In one embodiment, the management device 1 is capable of receiving and transmitting, on a plurality of physical input channels and a plurality of physical output channels, numerous audio signals, transmitted from different sources and/or with different transmission protocols. However, the proposed management device 1 is designed to be used in embedded environments, where resources are limited, it is not possible to process all channels at the same time. As will be described in more detail below, the management device 1 is configured to implement an input assignment function, also known in the jargon by the term "input patch", by means of which the input channels that will then actually be processed by the device, i.e. processing channels, are chosen. Similarly, the processed signals, or, thanks to the "pickoff point" function described below, partially processed signals, can be sent to multiple physical output channels.

Therefore, thanks to the input patch function, physical input channels are assigned to processing channels and thanks to the output patch function processing channels are assigned to physical output channels. In addition, with the pickoff point function it is possible to assign processing channels to physical output channels at intermediate stages of processing.

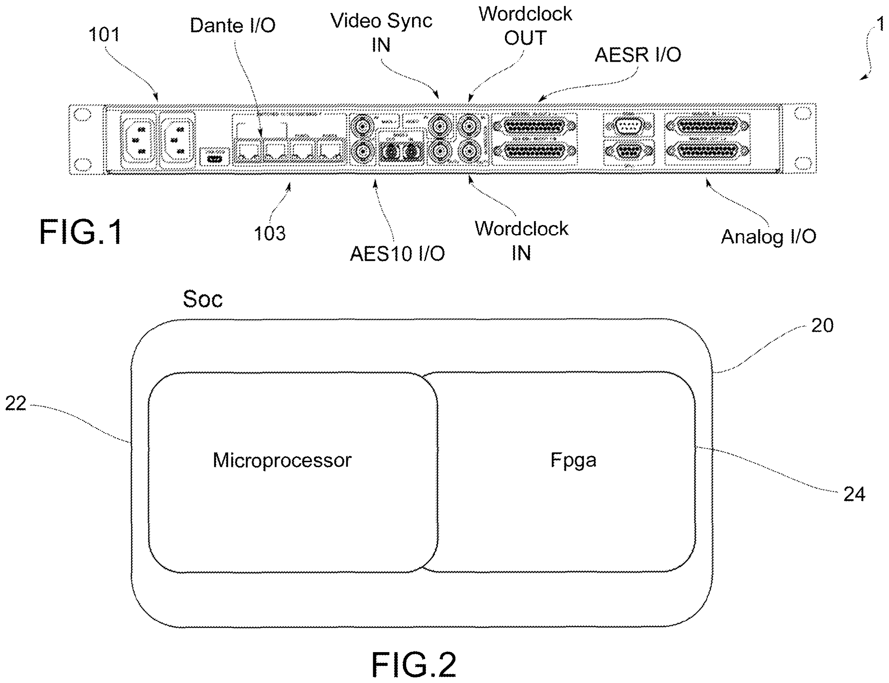

In one embodiment, the device 1 is provided with 216 audio input channels and 216 audio output channels. For example, the channels are divided as follows:
- 8 input/output channels with AES3 transmission protocol (AES3 I/O in figure 1); since each AES3 interface carries 2 channels, there are a total of 16 AES3 channels;
- 2 input/output channels with AES10 transmission protocol, also called MADI (AES10 I/O in figure 1); since each AES10 interface carries 64 channels, there are a total of 128 AES10 channels;
- 64 input/output channels with Dante transmission protocol (DANTE in figure 1);
- 8 analogue input/output channels (ANALOG I/O in figure 1) .

In one embodiment, the processable channels, i.e., the processing channels, are 16 in input and 16 in output.

In short, the functions performed by the management device 1 include:
- processing of audio signals, or the processing of the audio signal consisting of modifying said signal. The processing includes equalizations and possibly further changes in levels, delays, polarity reversals,. For example, the management device 1 provides these functions for calibrating professional audio systems.
- Management of a maximum number of channels in input and output, for example up to 216 channels.
- Management of a number of independently processable input and output channels: for example 16 input and 16 output channels with dedicated functions for inputs and outputs.
- Management of input and output signals based on multiple and different transmission protocols. As is known, transmission protocols are used to simultaneously transmit multiple channels on the same physical line. For example, as anticipated above, the management device 1 is capable of receiving and transmitting audio signals on five different interfaces simultaneously and independently. The protocols managed are: AES3, Dante (AES67 compatible), AES10 (on two interfaces - optic fibre and coaxial cable), analogue.
- Clock signal management. As is known, a clock signal can be extracted from each digital audio signal. The management device 1 is capable of dynamically synchronizing with any of the input clock signals, as long as they are valid. The management device 1 has clock priority strategies that consist of providing alternative clocks in the event that a primary clock, such as a first clock in a user-defined priority list, is invalid. In one embodiment, illustrated in Figure 1, the management device 1 can synchronize with any of the following 14 clock sources: a WORDCLOCK Input, a VIDEO SYNC Input, a clock signal from the optical AES10, a clock signal from the coaxial AES10, a clock signal from Dante, a clock signal from each of the eight input AES3 connections, and an internally generated clock from the device.
- Management of digital signals with different clocks: the management device 1 is able to accept completely independent clock signals. For example, it can accept up to 16 channels with clocks other than the active clock in the management device 1 since it has 16 Asynchronous Sample Rate Converters (ASRCs), one on each logic input audio channel. In one embodiment, the device 1 is further capable of converting output signals, for example to change them from 96 kHz to 48 kHz, using Synchronous Sample Rate Converters (SSRCs), and also allows each input signal to be returned in output without modifying its protocol. In the case of AES3 and AES10 protocol (both optical and coaxial), the management device 1 is able to regenerate the clock signal, thus ensuring a high quality of the output signal without compromising the quality of the audio signal chain which the management device 1 is part of. Signal regeneration takes place at very low latency and requires, for example, only one sample, i.e. a 96 kHz sample.

In one embodiment, the device 1 is provided with two clock outputs, completely independent of each other and a "master clock".

In more detail, the output channels have as a clock what the user selects as master clock. In addition, there are two connectors, WORDCLOCK Output, to which any clock out of the available clock sources can be independently assigned.

In one embodiment, the device 1 is provided with a dual power supply, connected to two separate sockets 101, to be used for example on two different electrical phases, in order to ensure continuity of use even in the event of power failure on one of the two phases.

In one embodiment, the device 1 is equipped with four RJ45 103 ethernet network ports configurable in different modes: all four ports may belong to the same VLAN to allow both traffic related to the control of the management device 1 and that of the Dante protocol; for example, two ports may be reserved for traffic used by the Dante protocol (redundant or not) and two for the control of the management device 1 only.

According to one aspect of the invention, schematically illustrated in Figure 2, the functions described above are implemented by a single integrated circuit 20 (SOC, "System-on-a-chip"), which realizes a microprocessor processing unit 22 and programmable logic unit 24.

In one embodiment, the programmable logic unit 24 is implemented with an FPGA technology.

This configuration allows, with a single integrated circuit 20, a more suitable operating system to be adopted for interfacing with the end user in combination with a real-time system based on programmable logic.

A single integrated circuit 20 improves the production and reliability of the product, with particular attention to the lifecycle costs of the product.

It should be noted that, usually, the proposed solutions for hybrid systems involve the use of the programmable logic unit for digital interfaces and the processing unit for the entire software, including the signal processing algorithm. The logic unit, in the prior solutions, is also used to accelerate some parts of the processing algorithm in hardware (typically those parts that require an increased performance that is not normally achieved with processors).

These known configurations, however, cause the device to stop working if any operating system failure occurs.

On the other hand, adopting real-time operating systems in the processing unit would make it more difficult to find and develop software solutions to facilitate the interface with the customer.

To make the presence of an operating system, with its complexities, completely independent of the hardware that forms the programmable logic 24, the management device 1 proposes a solution in which all signal processing, input and output, clock management and all backup strategies are carried out by the programmable logic unit 24, leaving instead to the processing unit 22 only the operating system and the management of network communication with the user interface.

According to one aspect of the invention, the software/hardware configuration of the management device 1 is characterized by loading a Bitstream file, i.e. by the content of the programmable logic unit. This loading is performed by the processing unit on the programmable logic unit. In this way, it is also possible to completely transform the characteristics of the machine, because the IP components are loaded according to the selected Bitstream.

In more detail, the term user interface means the set of software means (hereinafter referred to as control software) and hardware that allow the user to configure and monitor the management device (e.g. in terms of signal level, clock status, etc.), also intervening on the parameters of the audio processing algorithm.

In one embodiment, the software on the operating system communicates through BSD Berkeley Socket providing different TCP and UDP servers.

The control software is suitable to allow the user to:
A) monitor the status of signals passing through the device (Metering);
B) check the status of configuration parameters regulating the processing of digital signals within the device;
C) intervene to modify parameters that determine the processing of audio signals, even one or more parameters simultaneously;
D) intervene to modify parameters also of groups of channels through the group and custom panel functions described below. A group is composed of one or more channels, which can be picked up, and then assigned to the group, from the same device 1 or from different devices. It is possible, for example, to take a processing channel of a first management device 1 and create a group with a processing channel of a second management device 1. When the user acts on the channel group, he acts simultaneously, while moving, for example, a single fader, both on the processing channel of the first management device and on the processing channel of the second management device.

In one embodiment, monitoring takes place via UDP packet exchange: following a request made via a proprietary protocol, the device responds by providing the magnitudes useful for monitoring the status of the signals. The UDP protocol is used for its characteristics of speed and adaptability to embedded contexts.

As regards the control of configuration parameters, the control software, through the exchange of TCP packets with the device, for example using specific commands of a proprietary and dedicated protocol, is able to read the status of the configuration parameters saved on the machine which regulate the numerical processing of signals. In this case the TCP protocol has been chosen for its reliability and to provide the most stable user experience possible.

With regard to parameter modification, the control software offers the possibility to act not only at the level of a single parameter, but also to be able to quickly modify a set of significant parameters of the same device.

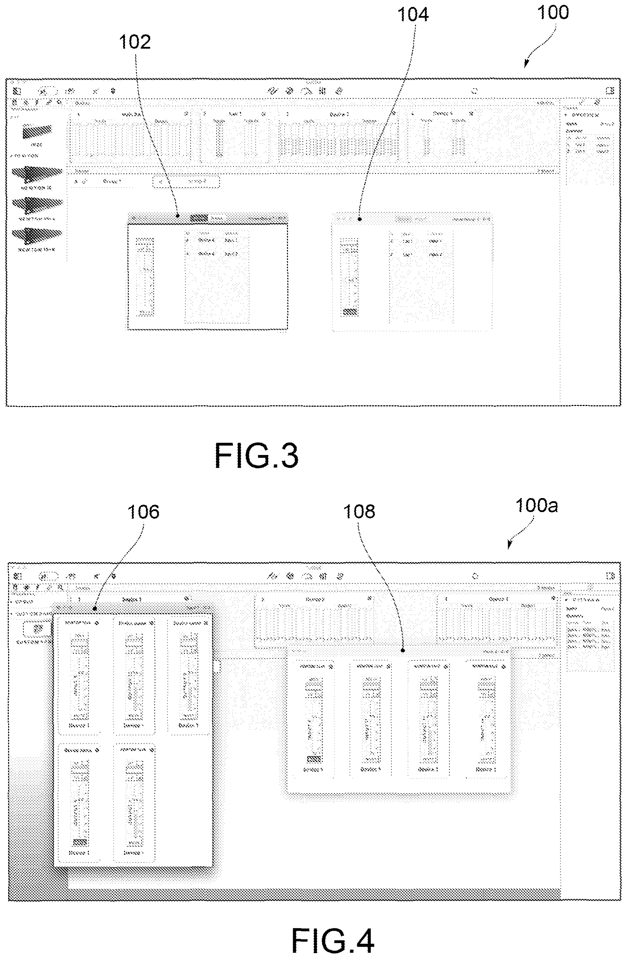

As regards modifying the parameters of groups of devices, the control software allows two types of virtual entities to be created:
i) Group: one or more channels can be assigned to a group, and channels from different devices can be assigned to a group. Through the group interface it is possible to add a level of regulation (for example an equalizer) to that already present on the channels in question. This level is shared by all the entities assigned to the group in question, and allows a hierarchical and scalable control and management of different sections of the sound reinforcement system. Figure 3 shows an example of an embodiment of a user interface 100: there are two groups 102, 104 on the screen, containing channels from two different devices. A single control can be seen which allows the user to act on multiple devices at the same time, adding a level of abstraction and scalability.
ii) "Custom Panel": it is possible to create one or more customised control interfaces containing all and only the channels of particular interest. After composing this interface, the user will be able to quickly monitor and control the sound reinforcement system since he will not have to manage numerous screen windows or use different software applications for the purpose. Figure 4 shows an example of a user interface 100a that allows this function to be implemented: there are two custom panels 106, 108 on the screen, containing channels from three different management devices 1 equipped with 16 digital inputs/outputs and 8 analogue inputs.

As mentioned above, in one embodiment, the management device 1 is suitable for simultaneously processing input 16 and output 16 channels, while being able to receive and transmit a greater number of input and output signals.

In fact, in one embodiment the management device 1 can implement a dynamic number of ASRCs, depending on the hardware configuration of the processor used. The larger the programmable logic unit (FPGA) is, the more ASRCs are allowed, making all channels fully synchronous. In the case of all synchronous channels, the user can arbitrarily assign any input channel to the output.

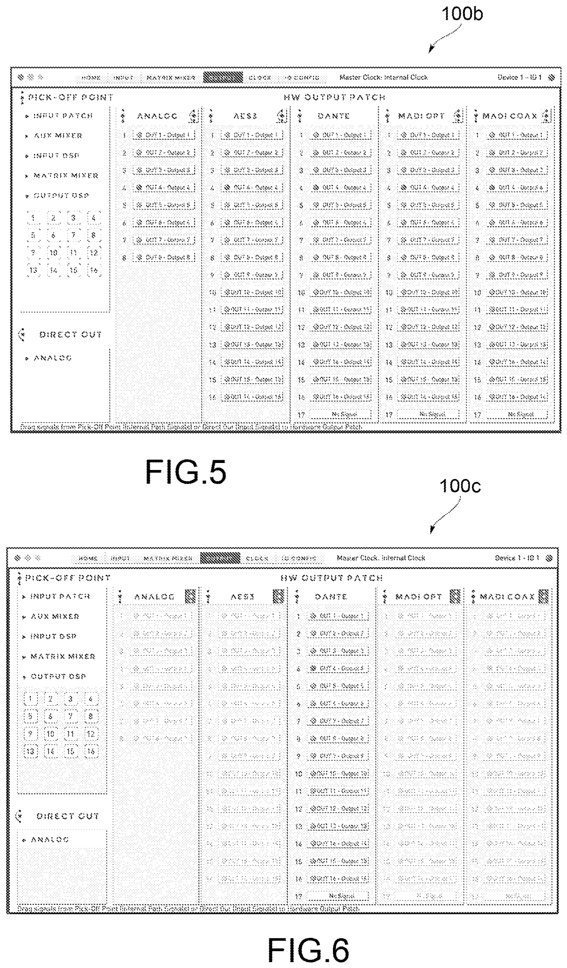

Figure 5 shows a detail of a user interface 100b that allows the programmable logic unit to implement an output assignment block. It is a functional block that associates processing channels with physical channels and is also referred to in the jargon as "output patch".

In the event that the programmable logic unit does not allow all the input channels to be synchronized, the management device 1 can be operated in a cascade mode ("Cascade Mode").

In more detail, the management device 1 is able to return the input signal exactly to the outside, a feature called "Direct Out". Figure 6 shows a detail 100c of an output patch in which the outputs of the different interfaces are activated in "Direct Out" mode.

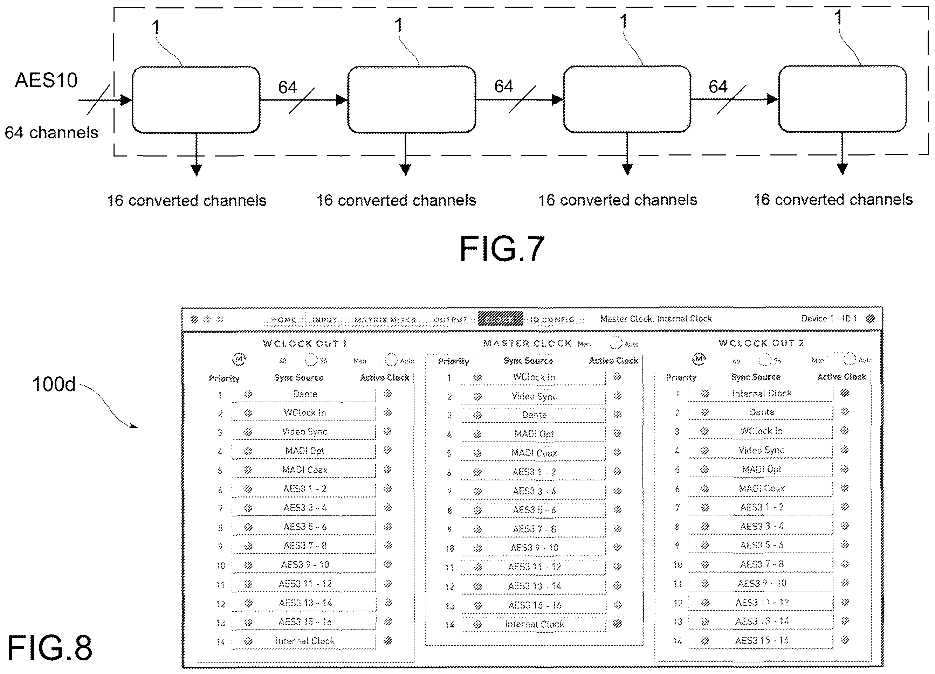

Therefore, if, for example, the user wishes to make a full AES10 Coaxial 64-channel converter, in the case of reduced FPGA, it is sufficient to use four management devices 1 by cascading them with respect to the Direct Out of the AES10 protocol, as shown in the diagram in Figure 7.

The flexibility of the management device 1 in terms of conversion and processing is mainly provided by being able to use ASRCs made of FPGA, thus allowing their easy allocation or not.

We will now describe some backup strategies that the management device 1 can implement. The backup strategy is a technology for which the user defines a list of priorities for both the master clock and each audio signal to be assigned for processing. Depending on the status of the clock signals and the status of the audio signals, the management device 1 selects the most reliable source.

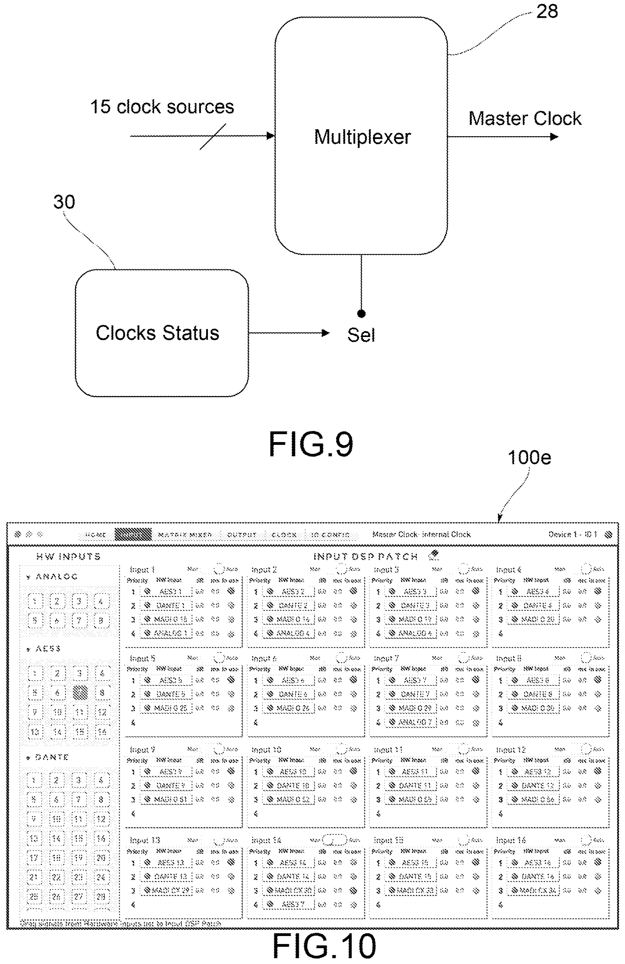

Regarding the backup strategy of the clock signals, performed entirely by the programmable logic unit 24 and shown schematically in figure 9, two main types of IP are used, the multiplexer 28 and the clock detector 30.

The clock detector 30 allows the recognition of the type and quality of the clock, through the use of a counter and with definable tolerance thresholds.

The multiplexer 28, instead, receives as input all the possible clock inputs and, based on the status of each and/or based on the list of defined priorities, selects the most suitable clock.

Figure 8 shows a detail of the clock manager configuration interface 100d of the management device 1 via the control software.

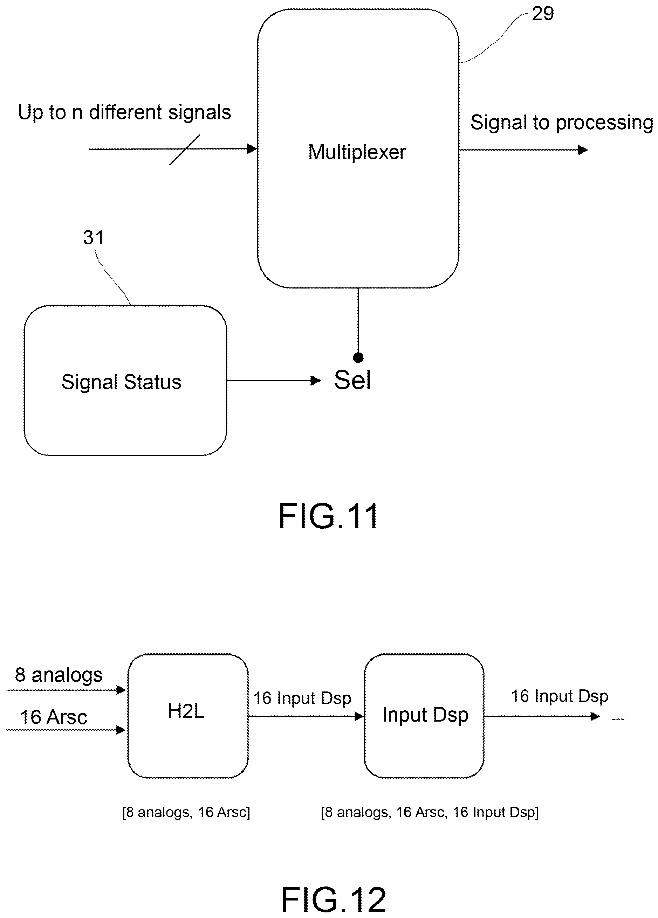

Regarding the backup strategy for audio signals, shown schematically in Figure 11, the ASRCs are used dynamically.

If the programmable logic unit 24 has sufficient resources, then it is possible to dedicate an ASRC for each signal present in the backup list, so as to ensure a "glitch free" transfer, i.e. without any alteration in the single-sample audio signal.

If, on the other hand, the programmable logic unit does not have sufficient resources, then it is possible to implement an "Input Patch" function that allows a single ASRC to be allocated for each signal to be provided for processing. This ASRC is preceded by a multiplexer 29, driven by a signal status IP block 31, which determines the status of the various channels included in the priority list (Figure 11).

Figure 10 shows a detail 100e of the input patch assignment of the management device 1 via the interface of the control software.

The management device 1 presents itself as a processor able to perform full processing for input 16 and output 16 channels. However, through the Pickoff point technology described below, it is possible to render such a processor capable of providing a higher number of processed channels.

The function of the PickOff Point is to extract the audio signal at a certain point in the processing and send it to one of the outputs of the device. With this solution, the processed channels may be more numerous than those conventionally allocated as input-output. For example, the management device 1 processes 16 channels. The 16 outputs of the processing are sent to one or more physical outputs (the reverse is not true, i.e. each physical output cannot be driven by multiple audio signals). With the Pickoff point it is possible, for example, to pick up the signal after processing inserted by the Dsp Input and to send such signal directly to a physical output. However, the same processed channel can continue its path. This increases, virtually, the number of channels processed, while the number of input and output channels of the device are pre-set at a hardware level.

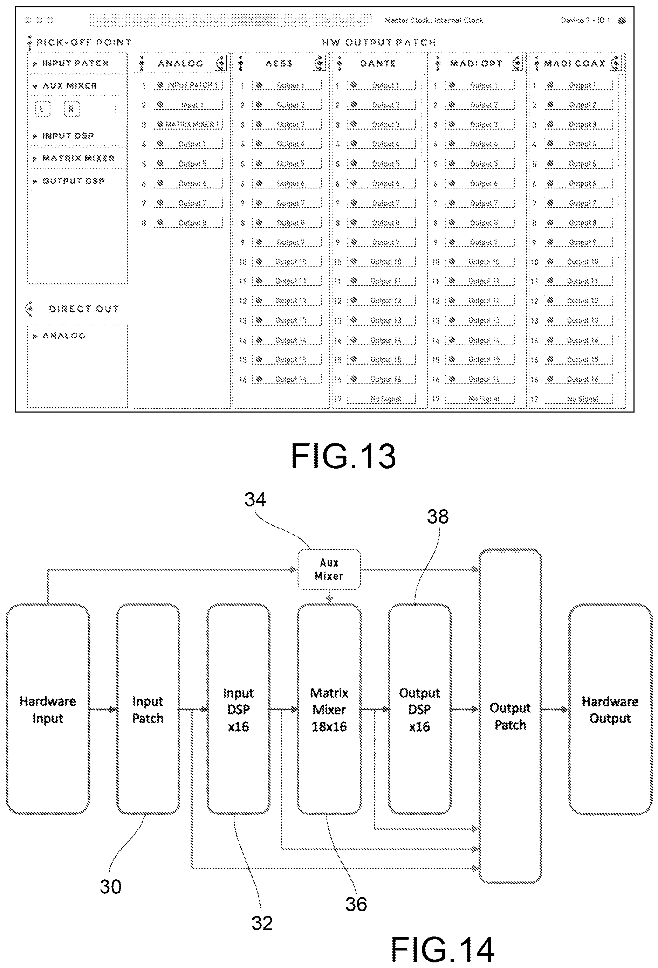

Consequently, Pickoff Point technology consists of being able to pick up the signal anywhere in the audio chain, and then direct it to one or more of the physical outputs. In particular, as illustrated in the block diagram in Figure 14, it is possible to:
- pick up the signal after the input patch 30, i.e. after ASRC processing (the channel is synchronous and therefore can be directed to any output);
- pick up the signal after the Input DSP 32 has been activated;
- pick up the signal after the Aux Mixer 34 has been activated;
- pick up the signal after the Matrix Mixer 36 has been activated;
- pick up the signal after the DSP Output 38 has been activated;
This technology is realized, in the programmable logic unit 24, through the use of a stream, or vector, equipped with the data signal and a control signal, which collects all the samples before and after the intervention of each functional block that implements the audio processing algorithm.

For example, as illustrated in the diagram in Figure 12, the vector is created as follows:
[8 analogue channels] - are already synchronous since the hardware has been designed so that the A/D and D/A clock is the master clock;
[8 analog channels, 16 ASRCs] - the 16 channels derived from the activation of the 16 ASRCs are concatenated;
[8 analog channels, 16 ASRC, 16 Input Dsps] - the 16 channels derived from the choice of the priority list for the input patch are concatenated;

This principle applies to as many channels as desired and as many processing blocks as desired.

It is also possible, for example, to inject synchronous signals from outside into a given processing block, actually bypassing some blocks.

Time alignment is ensured by the management of the processing blocks, which insert any compensations according to the pipeline policies used.

The use of the FPGA programmable logic unit allows full management on a single sample, since, assuming for example a system clock equal to 100MHz and a sampling clock equal to 96kHz (sampling frequency of the master clock of the management device 1), it means having about 1040 clock strokes available. Given the FPGA's ability to apply processing (gain or delay or filters) at a single clock stroke, this means being able to manage a sample vector as long as desired.

A person skilled in the art may make modifications and adaptations to the embodiments of the device for managing digital audio signals according to the invention, replacing elements with others functionally equivalent so as to satisfy contingent requirements while remaining within the scope of protection of the following claims.

## Claims

1. Digital audio signal management kit, comprising a management device (1) for managing digital audio signals and a user interface (100, 100a, 100b), the management device comprising a plurality of input channels suitable for receiving input audio signals and a plurality of output channels suitable for transmitting output audio signals, a microprocessor processing unit (22) and programmable logic unit (24), wherein:
- the processing unit is configured to manage the operating system and an embedded application suitable to communicate with the user interface for configuring the programmable logic unit;
- the programmable logic unit is configured to manage the input and output channels, the processing of digital audio signals through an audio processing algorithm, and clock signals through clock management software, wherein the processing of digital audio signals includes equalizations;
wherein the user interface is based on control software of the management device comprising code portions for:
- monitoring the state of the channels passing through the management device;
- checking the state of configuration parameters that regulate the processing of digital audio signals made by the programmable logic unit;
- changing the state of said configuration parameters,
wherein the programmable logic unit is equipped, for each input channel, with an Asynchronous Sample Rate Converter, ASRC, so as to synchronize digital audio signals with clock signals completely independent from one another,
and wherein the programmable logic unit is configured to define a priority for processing the input channels and for clock signals, the programmable logic unit being configured to detect the state of the input channels and clock signals and to select the input channel and clock based on the state of said signals and/or on the basis of a user-defined priority list.

2. Kit according to claim 1, wherein the software/hardware configuration of the programmable logic unit is defined by a bitstream file loaded on the programmable logic unit by the processing unit.

3. Kit according to any one of the preceding claims, wherein the programmable logic unit and the processing unit are configured to implement a function of assigning one or more input channels subjected to the audio processing algorithm to a group of input channels so as to allow the user, through the user interface, to simultaneously control the processing parameters of all the channels assigned to such group of input channels.

4. Kit according to any one of the preceding claims, wherein the programmable logic unit is configured to:
- process a maximum number of input channels and output channels simultaneously;
- process two or more different digital audio signal transmission protocols;
- convert a digital audio signal received in a first format corresponding to a first transmission protocol into a digital audio signal in a second format corresponding to a second transmission protocol;
- assign any input channel to any output channel.

5. Kit according to claim 4, wherein the programmable logic unit is configured to implement a direct connection function suitable for reporting on exactly one output channel an audio signal present on an input channel so as to allow a cascade connection of two or more management devices for processing a number of channels transmitted with a multi-channel, point-to-point protocol that exceeds the maximum number of channels that may be processed by a single management device.

6. Kit according to any one of the preceding claims, wherein, for the management of clock signals, the programmable logic unit is programmed to implement:
- a clock detector suitable to allow the recognition of the type and quality of a clock signal through the use of a counter and with definable tolerance thresholds;
- a multiplexer suitable to receive as input all the possible clock signals in input to the device and, based on the state of each of them and based on the list of priorities defined, select the most suitable clock.

7. Kit according to any one of the preceding claims, wherein the programmable logic unit is configured to allocate an Asynchronous Sample Rate Converter, ASRC, with multiple channels to be processed, said ASRC being controlled by a multiplexer driven on the basis of the state of the different channels to be processed or inserted in a priority list established by the user through the user interface.

8. Kit according to any one of the preceding claims, wherein the programmable logic unit is configured to allocate a single Asynchronous Sample Rate Converter, ASRC, for each channel to be subjected to processing, wherein said ASRC is preceded by a multiplexer driven by a channel state detection block that determines the state of the input channels and/or those inserted in a priority list established by the user through the user interface.

9. Kit according to any one of the preceding claims, wherein the programmable logic unit is configured to implement a PickOff Point function that allows an audio signal sampled at a certain point of the processing chain implemented by the audio processing algorithm to be directed to an output channel in order to obtain at the output a number of processed channels greater than the maximum number of channels that may be processed simultaneously by the processing algorithm.

10. Kit according to claim 9, wherein the PickOff Point function is implemented through the use of a stream, or vector, which collects all the samples of an audio signal before and after the intervention of each functional block which implements the processing algorithm.

11. Kit according to any one of the preceding claims, wherein the processing unit and the programmable logic unit are implemented on a single integrated circuit.

12. Kit according to anyone of the previous claims, wherein the state of digital audio signals is monitored through an exchange of UDP ("User Datagram Protocol") packets.

13. Kit according to anyone of the previous claims, wherein the control software uses an exchange of TCP packets with the processing unit for reading and/or modifying the state of the configuration parameters.

## Patentansprüche

1. Kit zur Verwaltung digitaler Audiosignale, umfassend eine Verwaltungsvorrichtung (1) zur Verwaltung digitaler Audiosignale und eine Benutzerschnittstelle (100, 100a, 100b), wobei die Verwaltungsvorrichtung eine Vielzahl von Eingangskanälen, die zum Empfangen von Eingangs-Audiosignalen geeignet sind, und eine Vielzahl von Ausgangskanälen, die zum Senden von Ausgangs-Audiosignalen geeignet sind, eine Mikroprozessor-Verarbeitungseinheit (22) und eine programmierbare Logikeinheit (24) umfasst, wobei:
- die Verarbeitungseinheit so konfiguriert ist, dass sie das Betriebssystem und eine eingebettete Anwendung verwaltet, die zur Kommunikation mit der Benutzerschnittstelle zur Konfiguration der programmierbaren Logikeinheit geeignet ist;
- die programmierbare Logikeinheit so konfiguriert ist, dass sie die Eingangs- und Ausgangskanäle, die Verarbeitung digitaler Audiosignale mittels eines Audioverarbeitungsalgorithmus sowie Taktsignale mittels einer Taktverwaltungssoftware verwaltet, wobei die Verarbeitung digitaler Audiosignale Entzerrungen umfasst;
wobei die Benutzerschnittstelle auf einer Steuerungssoftware der Verwaltungsvorrichtung basiert, die Codeabschnitte umfasst zum:
- Überwachen des Zustands der Kanäle, die durch die Managementvorrichtung verlaufen;
- Überprüfen des Zustands von Konfigurationsparametern, die die durch die programmierbare Logikeinheit erfolgte Verarbeitung von digitalen Audiosignalen regeln;
- Ändern des Zustands der Konfigurationsparameter,
wobei die programmierbare Logikeinheit für jeden Eingangskanal mit einem asynchronen Abtastratenwandler (ASRC) ausgestattet ist, um digitale Audiosignale mit Taktsignalen vollständig unabhängig voneinander zu synchronisieren,
und wobei die programmierbare Logikeinheit so konfiguriert ist, dass sie eine Priorität für die Verarbeitung der Eingangskanäle und für Taktsignale definiert, wobei die programmierbare Logikeinheit so konfiguriert ist, dass sie den Zustand der Eingangskanäle und der Taktsignale erfasst und den Eingangskanal sowie den Takt auf der Grundlage des Zustands der Signale und/oder auf der Grundlage einer benutzerdefinierten Prioritätenliste auswählt.

2. Kit nach Anspruch 1, wobei die Software-/Hardware-Konfiguration der programmierbaren Logikeinheit durch eine Bitstream-Datei definiert ist, die von der Verarbeitungseinheit auf die programmierbare Logikeinheit geladen wird.

3. Kit nach einem der vorhergehenden Ansprüche, wobei die programmierbare Logikeinheit und die Verarbeitungseinheit so konfiguriert sind, dass sie eine Funktion zum Zuweisen eines oder mehrerer Eingangskanäle, die dem Audioverarbeitungsalgorithmus unterliegen, zu einer Gruppe von Eingangskanälen implementieren, um es dem Benutzer zu ermöglichen, über die Benutzerschnittstelle die Verarbeitungsparameter aller dieser Gruppe von Eingangskanälen zugewiesenen Kanäle gleichzeitig zu steuern.

4. Kit nach einem der vorhergehenden Ansprüche, wobei die programmierbare Logikeinheit konfiguriert ist zum:
- gleichzeitigen Verarbeiten einer maximalen Anzahl von Eingangskanälen und Ausgangskanälen;
- Verarbeiten von zwei oder mehr verschiedenen Übertragungsprotokollen für digitale Audiosignale;
- Umwandeln eines digitalen Audiosignals, das in einem ersten Format entsprechend einem ersten Übertragungsprotokoll empfangen wurde, in ein digitales Audiosignal in einem zweiten Format entsprechend einem zweiten Übertragungsprotokoll;
- Zuweisen eines beliebigen Eingangskanals zu einem beliebigen Ausgangskanal.

5. Kit nach Anspruch 4, wobei die programmierbare Logikeinheit so konfiguriert ist, dass sie eine Direktverbindungsfunktion implementiert, die geeignet ist, ein auf einem Eingangskanal vorhandenes Audiosignal auf genau einem Ausgangskanal auszugeben, um eine Kaskadenverbindung von zwei oder mehr Verwaltungsvorrichtungen zur Verarbeitung einer Anzahl von Kanälen zu ermöglichen, die mit einem Punkt-zu-Punkt-Mehrkanalprotokoll übertragen werden und die die maximale Anzahl von Kanälen überschreiten, die von einer einzelnen Verwaltungsvorrichtung verarbeitet werden können.

6. Kit nach einem der vorhergehenden Ansprüche, wobei die programmierbare Logikeinheit zur Verwaltung von Taktsignalen so programmiert ist, dass sie Folgendes implementiert:
- einen Taktdetektor, der geeignet ist, das Erkennen des Typs und der Qualität eines Taktsignals durch die Verwendung eines Zählers und mit definierbaren Toleranzschwellen zu ermöglichen;
- einen Multiplexer, der geeignet ist, als Eingang alle möglichen Taktsignale am Eingang der Vorrichtung zu empfangen und auf der Grundlage des Zustands jedes einzelnen dieser Signale sowie auf der Grundlage der definierten Prioritätenliste den am besten geeigneten Takt auszuwählen.

7. Kit nach einem der vorhergehenden Ansprüche, wobei die programmierbare Logikeinheit so konfiguriert ist, dass sie einen asynchronen Abtastratenwandler (ASRC) mit mehreren zu verarbeitenden Kanälen zuweist, wobei der ASRC durch einen Multiplexer gesteuert wird, der auf der Grundlage des Zustands der verschiedenen zu verarbeitenden Kanäle oder der Aufnahme in eine von dem Benutzer über die Benutzerschnittstelle erstellte Prioritätenliste angesteuert wird.

8. Kit nach einem der vorhergehenden Ansprüche, wobei die programmierbare Logikeinheit so konfiguriert ist, dass sie jedem zu verarbeitenden Kanal einen einzelnen asynchronen Abtastratenwandler (ASRC) zuweist, wobei dem ASRC ein Multiplexer vorgeschaltet ist, der von einem Kanalzustandserkennungsblock angesteuert wird, der den Zustand der Eingangskanäle und/oder derjenigen bestimmt, die in eine von dem Benutzer über die Benutzerschnittstelle festgelegte Prioritätenliste aufgenommen wurden.

9. Kit nach einem der vorhergehenden Ansprüche, wobei die programmierbare Logikeinheit so konfiguriert ist, dass sie eine PickOff-Point-Funktion implementiert, die es ermöglicht, ein an einem bestimmten Punkt der durch den Audioverarbeitungsalgorithmus implementierten Verarbeitungskette abgetastetes Audiosignal an einen Ausgangskanal zu leiten, um am Ausgang eine Anzahl verarbeiteter Kanäle zu erhalten, die größer ist als die maximale Anzahl von Kanälen, die gleichzeitig durch den Verarbeitungsalgorithmus verarbeitet werden können.

10. Kit nach Anspruch 9, wobei die PickOff-Point-Funktion durch die Verwendung eines Streams oder Vektors implementiert wird, der alle Abtastwerte eines Audiosignals vor und nach dem Eingreifen jedes Funktionsblocks sammelt, der den Verarbeitungsalgorithmus implementiert.

11. Kit nach einem der vorhergehenden Ansprüche, wobei die Verarbeitungseinheit und die programmierbare Logikeinheit auf einem einzigen integrierten Schaltkreis implementiert sind.

12. Kit nach einem der vorhergehenden Ansprüche, wobei der Zustand digitaler Audiosignale durch einen Austausch von UDP-Paketen ("User Datagram Protocol") überwacht wird.

13. Kit nach einem der vorhergehenden Ansprüche, wobei die Steuerungssoftware einen Austausch von TCP-Paketen mit der Verarbeitungseinheit zum Lesen und/oder Modifizieren des Zustands der Konfigurationsparameter verwendet.

## Revendications

1. Kit de gestion de signaux audio numériques, comprenant un dispositif de gestion (1) pour gérer des signaux audio numériques et une interface utilisateur (100, 100a, 100b), le dispositif de gestion comprenant une pluralité de canaux d'entrée aptes à recevoir des signaux audio d'entrée et une pluralité de canaux de sortie aptes à transmettre des signaux audio de sortie, une unité de traitement à microprocesseur (22) et une unité logique programmable (24), dans lequel :
- l'unité de traitement est configurée pour gérer le système d'exploitation et une application embarquée apte à communiquer avec l'interface utilisateur pour configurer l'unité logique programmable ;
- l'unité logique programmable est configurée pour gérer les canaux d'entrée et de sortie, le traitement des signaux audio numériques par le biais d'un algorithme de traitement audio, et les signaux d'horloge par le biais d'un logiciel de gestion d'horloge, dans lequel le traitement des signaux audio numériques comprend des égalisations ;
dans lequel l'interface utilisateur est basée sur un logiciel de commande du dispositif de gestion comprenant des parties de code pour :
- le suivi de l'état des canaux transitant par le dispositif de gestion ;
- la vérification de l'état des paramètres de configuration qui régulent le traitement des signaux audio numériques effectués par l'unité logique programmable ;
- la modification de l'état desdits paramètres de configuration,
dans lequel l'unité logique programmable est équipée, pour chaque canal d'entrée, d'un convertisseur de fréquence d'échantillonnage asynchrone (en Anglais « Asynchronous Sample Rate Converter » pour ASRC) de manière à synchroniser les signaux audio numériques avec les signaux d'horloge complètement indépendants les uns des autres,
et dans lequel l'unité logique programmable est configurée pour définir une priorité pour le traitement des canaux d'entrée et pour les signaux d'horloge, l'unité logique programmable étant configurée pour détecter l'état des canaux d'entrée et des signaux d'horloge et pour sélectionner le canal d'entrée et l'horloge sur la base de l'état desdits signaux et/ou sur la base d'une liste de priorités définie par l'utilisateur.

2. Kit selon la revendication 1, dans lequel la configuration logicielle/matérielle de l'unité logique programmable est définie par un fichier de flux binaire chargé sur l'unité logique programmable par l'unité de traitement.

3. Kit selon l'une quelconque des revendications précédentes, dans lequel l'unité logique programmable et l'unité de traitement sont configurées pour mettre en œuvre une fonction d'attribution d'un ou plusieurs canaux d'entrée soumis à l'algorithme de traitement audio à un groupe de canaux d'entrée de manière à permettre à l'utilisateur, par l'intermédiaire de l'interface utilisateur, de contrôler simultanément les paramètres de traitement de tous les canaux attribués à un tel groupe de canaux d'entrée.

4. Kit selon l'une quelconque des revendications précédentes, dans lequel l'unité logique programmable est configurée pour :
- traiter simultanément un maximum de canaux d'entrée et de canaux de sortie ;
- traiter deux ou plusieurs protocoles de transmission de signaux audio numériques différents ;
- convertir un signal audio numérique reçu dans un premier format correspondant à un premier protocole de transmission en un signal audio numérique dans un deuxième format correspondant à un deuxième protocole de transmission ;
- assigner n'importe quel canal d'entrée à n'importe quel canal de sortie.

5. Kit selon la revendication 4, dans lequel l'unité logique programmable est configurée pour mettre en œuvre une fonction de connexion directe apte à rapporter sur exactement un canal de sortie un signal audio présent sur un canal d'entrée de manière à permettre une connexion en cascade de deux ou plusieurs dispositifs de gestion pour traiter un nombre de canaux transmis avec un protocole multicanal point à point qui dépasse le nombre maximum de canaux qui peuvent être traités par un seul dispositif de gestion.

6. Kit selon l'une quelconque des revendications précédentes, dans lequel, pour la gestion des signaux d'horloge, l'unité logique programmable est programmée pour mettre en œuvre :
- un détecteur d'horloge adapté pour permettre la reconnaissance du type et de la qualité d'un signal d'horloge grâce à l'utilisation d'un compteur et avec des seuils de tolérance définissables ;
- un multiplexeur apte à recevoir en entrée tous les signaux d'horloge possibles en entrée du dispositif et, en fonction de l'état de chacun d'eux et en fonction de la liste des priorités définies, sélectionner l'horloge la plus appropriée.

7. Kit selon l'une quelconque des revendications précédentes, dans lequel l'unité logique programmable est configurée pour allouer un convertisseur de fréquence d'échantillonnage asynchrone, ASRC, avec de multiples canaux à traiter, ledit ASRC étant contrôlé par un multiplexeur piloté sur la base de l'état des différents canaux à traiter ou à insérer dans une liste de priorités établie par l'utilisateur via l'interface utilisateur.

8. Kit selon l'une quelconque des revendications précédentes, dans lequel l'unité logique programmable est configurée pour allouer un seul convertisseur de fréquence d'échantillonnage asynchrone, ASRC, pour chaque canal devant être soumis à un traitement, dans lequel ledit ASRC est précédé d'un multiplexeur piloté par un bloc de détection d'état de canal qui détermine l'état des canaux d'entrée et/ou de ceux insérés dans une liste de priorité établie par l'utilisateur via l'interface utilisateur.

9. Kit selon l'une quelconque des revendications précédentes, dans lequel l'unité logique programmable est configurée pour mettre en œuvre une fonction de point de prélèvement (PickOff Point) qui permet à un signal audio échantillonné en un certain point de la chaîne de traitement mise en œuvre par l'algorithme de traitement audio d'être dirigé vers un
canal de sortie afin d'obtenir en sortie un nombre de canaux traités supérieur au nombre maximum de canaux qui peuvent être traités simultanément par l'algorithme de traitement.

10. Kit selon la revendication 9, dans lequel la fonction de point de prélèvement (PickOff Point) est mise en œuvre par l'utilisation d'un flux, ou vecteur, qui collecte tous les échantillons d'un signal audio avant et après l'intervention de chaque bloc fonctionnel qui met en œuvre l'algorithme de traitement.

11. Kit selon l'une quelconque des revendications précédentes, dans lequel l'unité de traitement et l'unité logique programmable sont mises en œuvre sur un seul circuit intégré.

12. Kit selon l'une quelconque des revendications précédentes, dans lequel l'état des signaux audio numériques est surveillé par un échange de paquets UDP (« User Datagram Protocol »).

13. Kit selon l'une quelconque des revendications précédentes, dans lequel le logiciel de commande utilise un échange de paquets TCP avec l'unité de traitement pour lire et/ou modifier l'état des paramètres de configuration.
